# EUROPEAN PATENT SPECIFICATION

(11) **EP 1 816 045 B1**
(45) Date of publication and mention of the grant of the patent: **02.12.2009**
(21) Application number: 07002236.3
(22) Date of filing: 01.02.2007
(51) Int. Cl.: B60T 8/17, B60T 8/172, B60T 8/173

(54) **Anti-lock brake apparatus for motorcycle**
Blockierschutzvorrichtung für ein Motorrad
Système de freinage antiblocage pour motocyclette

(30) Priority: 01.02.2006 JP 2006024523
(43) Date of publication of application: 08.08.2007
(73) Proprietor: NISSIN KOGYO CO., LTD., Ueda-shi, Nagano (JP)
(72) Inventor: Hasegawa, Tetsuya, Tomi-shi Nagano 389-0514 (JP)
(74) Representative: HOFFMANN EITLE

(56) References cited:
- EP-A1- 0 332 196
- EP-A1- 0 550 849
- EP-A2- 0 778 189
- DE-A1- 10 153 364
- DE-A1- 19 532 521
- DE-A1- 19 615 203
- JP-A- 10 203 344

## Description

### 1. Field of the Invention

The present invention relates to an anti-lock brake apparatus for a motorcycle capable of preventing each wheel of the motorcycle from being locked.

### 2. Description of Related Art

Recently, anti-lock brake apparatuses for motorcycles in which each wheel is prevented from being locked by properly controlling a brake pressure applied to each wheel using a slip ratio, which is calculated from an estimated vehicle speed based on the wheel speed of a front wheel or a rear wheel and the wheel speed of a target wheel for controlling, are known. Generally, the anti-lock brake apparatus for a motorcycle calculates an estimated vehicle speed based on the wheel speed of the front wheel. Because the front wheel is non-driven wheel in a non anti-lock control status, the estimated vehicle speed can be calculated precisely on the wheel speed of a non-driven wheel although the wheel speed of the rear wheel becomes higher than an actual speed of the vehicle (actual vehicle speed) due to an idle spin (wheel spin) of the rear wheel which is a driven wheel.

In the above-described general anti-lock brake apparatus for a motorcycle, when the motorcycle is in a status of doing wheelie (that is, the motorcycle is driven with a front wheel being lifted in the air) by sudden acceleration, the motorcycle is always in a non anti-lock control status since a brake operation is not performed, and accordingly, an estimated vehicle speed is calculated based on the wheel speed of the front wheel. In this case, since the front wheel is lifted into the air in the wheelie , the wheel speed of the front wheel is very low, but after the front wheel lands on the ground, the front wheel is rotated suddenly according to an actual vehicle speed, and thus the wheel speed of the front wheel rapidly increases (hereinafter, also referred to as a "frequency jump") . Thus, there is a problem in that the frequency jump is misconceived as noise when the height of the frequency jump is an impractical value for an actual acceleration. In the general anti-lock brake apparatus, when the frequency jump is determined to be noise, the wheel speed of the front wheel before the detection of the noise is fixed as a low speed, and the estimated vehicle speed is calculated based on the wheel speed of the front wheel. Accordingly, when the above-described frequency jump is misconceived as noise, when anti-lock control is performed after the landing of the front wheel, the estimated vehicle speed becomes lower than the actual vehicle speed, and accordingly, there is a problem in that proper anti-lock control cannot be performed.

As a technology for solving the above-described problem in related art, predetermined data (to be more specifically, the wheel speed of the front wheel before a digital filter process and the wheel speed of the rear wheel after the digital filter process) is compared to each other to identify a frequency jump from noise, so that the fix of the wheel speed of the front wheel to a previous low speed can be prevented is known (Japanese Patent Unexamined Publication JP-A-10-203344). To be more specifically, in this anti-lock brake apparatus, as shown in Fig 13, when the wheelie is started by accelerating the driven rear wheel, the non-driven front wheel is lifted in the air to make the wheel speed of the front wheel to have a low value. Accordingly, the estimated vehicle speed is calculated to be a value lower than the actual vehicle speed. Thereafter, when the front wheel lands on the ground, the wheel speed of the front wheel makes a frequency jump (rapid increase up to the actual speed). In the above-described anti-lock brake apparatus, the frequency jump is not misconceived as noise, and accordingly, the calculation of the estimated vehicle speed based on the wheel speed of the front wheel continues. However, generally, the calculation of the estimated vehicle speed is configured to be performed with the limit of the acceleration of the actual vehicle speed considered, and when the estimated vehicle speed increases with an acceleration higher than this acceleration limit, as shown in the figure, the estimated vehicle speed is configured to increase following a slope having an angle corresponding to the maximal acceleration.

In this technology as described above, the estimated vehicle speed increases following the slope having a predetermined angle after the front wheel lands on the ground. Accordingly, the estimated vehicle speed can be matched to the actual vehicle speed when a predetermined time elapses after the landing of the front wheel, compared to a case where the frequency jump is misconceived as noise to fix the estimated vehicle speed to a previous low value. Therefore, it becomes possible to perform a proper anti-lock control thereafter.

However, in the above-described related art, the estimated vehicle speed increases following the slope which is set by considering the actual acceleration limit of the vehicle speed, and it takes time for the estimated vehicle speed to reach the actual vehicle speed, and as a result, it takes time to perform a proper anti-lock control after the wheelie.

DE 195 32521 also discloses an antiblock braking apparatus involving detection rotation speeds of the front and rear wheels.

### SUMMARY OF THE INVENTION

In view of the above problem, an object of the present invention is to provide an anti-lock brake apparatus for a motorcycle capable of performing a proper anti-lock control quickly even after the wheelie.

According to an embodiment of the present invention, there is provided an anti-lock brake apparatus for a motorcycle, comprising:
a wheel speed obtaining unit which obtains wheel speed of front and rear wheels, respectively;
an estimated vehicle speed calculating unit which calculates an estimated vehicle speed based on the obtained wheel speeds; and
a front wheel acceleration calculating unit which calculates a wheel acceleration of the front wheel based on the wheel speed of the front wheel,
wherein anti-lock control is performed based on the wheel speeds and the estimated vehicle speed on the front and rear wheels, respectively,
the anti-lock brake apparatus being characterized in that:
the estimated vehicle speed calculating unit further includes a wheelie end determining unit which determines that wheelie has ended when following determination conditions (1) through (3) are satisfied:
   (1) the front wheel is under non-anti lock control;
   (2) the wheel speed of the rear wheel is higher than the estimated vehicle speed by a speed threshold value or more; and
   (3) the wheel acceleration of the front wheel is equal to or higher than an acceleration threshold value, and
when it is determined that the wheelie has ended by the wheelie end,determining unit, the estimated vehicle speed is calculated based on only the wheel speed of the rear wheel at least for a predetermined time.

Here, "the wheel speed of the rear wheel is higher than the estimated vehicle speed by a speed threshold value or more" is not for limiting the processing method and means that the above-described relationship is satisfied as a result.
In other words, as a method of determining whether "the wheel speed of the rear wheel is higher than the estimated vehicle speed by a speed threshold value or more", for example, a method of determining whether the difference between the wheel speed of the rear wheel and the estimated vehicle speed is equal to or greater than a speed threshold value, a method of determining whether the wheel speed of the rear wheel is equal to or higher than the sum of the speed threshold value and the estimated vehicle speed, or a method of determining whether (wheel speed of rear wheel - speed threshold value) / estimated vehicle speed ≥ 1 (that is, a ratio is in a predetermined relationship) may be used. Likewise, as a method of determining whether "the wheel acceleration of the front wheel is higher than an acceleration threshold value", the method by using a difference or a method by using a ratio which are described above may be used.
As a technique for determining "for a predetermined time", for example, a method by measuring actual time or a method in which the elapse of a predetermined time is determined when a control cycle is repeated a predetermined times may be used.

According to an embodiment of the invention, when a driver suddenly performs an operation of opening a throttle to start wheelie, a brake is not operated to be in a non anti-lock control status. Thus, the estimated vehicle speed calculating unit, at first, recognizes a condition that the front wheel is in non anti-lock control is satisfied. Thereafter, when a condition that the wheel speed of the rear wheel becomes higher than the estimated vehicle speed by a speed threshold value or more is satisfied as the wheelie continues, and a condition that the wheel acceleration of the front wheel based on the wheel speed of the front wheel becomes equal to or higher than an acceleration threshold value is satisfied by landing of the lifted front wheel on the ground, the wheelie end determining unit determines that the wheelie has ended. When the end of the wheelie is determined as described above, the estimated vehicle speed calculating unit calculates the estimated vehicle speed based only on the wheel speed of the rear wheel at least for a predetermined time.

According to an embodiment of the invention, in addition to the above-described configuration, a condition that the wheel speed of the rear wheel increases further after a status that the wheel speed of the rear wheel is higher than the estimated vehicle speed by the speed threshold value or more is reached may be added to the determination conditions of the wheelie end determining unit as an additional condition.
Accordingly, since a condition that the wheel speed of the rear wheel increases further after a status that the wheel speed of the rear wheel is higher than the estimated vehicle speed by the speed threshold value or more is reached is added as an additional condition, the wheelie which is mainly performed while accelerating a vehicle can be determined more correctly to be able to identify any other similar situation (for example, a status of abrupt lifting of the front wheel TF caused by riding over a height difference or riding down a height difference, wheel spin, or the like).

According to an embodiment of the invention, in addition to the above-described configuration, a time measuring unit which measures a duration in a status that the wheel speed of the rear wheel is higher than the estimated vehicle speed by the speed threshold value or more may be further included, and a condition that the duration measured by the time measuring unit is greater than a time threshold value may be added to the determination conditions of the wheelie end determining unit as an additional condition.

In this case, in addition to the above-described operations, when the wheel speed of the rear wheel becomes higher than the estimated vehicle speed by a speed threshold value or more, the time measuring unit starts measuring the duration of the status. In addition, the wheelie end determining unit determines a condition that the duration measured by the time measuring unit is greater than a time threshold value as an additional condition together with the determination of the above-described determination conditions. Accordingly, the wheelie in which a status that the wheel speed of the rear wheel is higher than the estimated vehicle speed by a speed threshold value or more is maintained for a predetermined time can be determined more correctly to be able to identify any other similar situation described above.

According to an embodiment of the invention, in addition to the above-described configuration, a rear wheel acceleration calculating unit which calculates a wheel acceleration of the rear wheel based on the wheel speed of the rear wheel may be further included, and a condition that the wheel acceleration of the rear wheel decreases by a predetermined value or more after a status that the wheel speed of the rear wheel is higher than the estimated vehicle speed by the speed threshold value or more is reached may be added to the determination conditions of the wheelie end determining unit as an additional condition.

In this case, in addition to the above-described operations, the rear wheel acceleration calculating unit calculates the wheel acceleration of the rear wheel based on the wheel speed of the rear wheel. In addition, the wheelie end determining unit determines whether the wheel acceleration of the rear wheel decreases by a predetermined value or more after a status that the wheel speed of the rear wheel is higher than the estimated vehicle speed by the speed threshold value or more is reached as an additional condition together with determining the above-described conditions. Accordingly, the decrease of the wheel acceleration of the rear wheel by a predetermined value or more after a status that the wheel speed of the rear wheel is higher than the estimated vehicle speed by the speed threshold value or more is reached can be determined to be able to determine the return of the throttle. Thus, the end of the wheelie can be determined more correctly to be able to identify any other similar situation described above.

According to the present invention, after the wheelie ends, an estimated vehicle speed is calculated based only on the wheel speed of the rear wheel which continuously contacts the ground from the start of the wheelie to the end of the wheelie, that is, the wheel speed close to the actual vehicle speed, and accordingly, proper anti-lock control can be started quickly after the wheelie.

### BRIEF DESCRIPTION OF THE DRAWINGS

Fig. 1 is a schematic diagram showing a configuration of an anti-lock brake apparatus for a motorcycle according to a first embodiment of the invention;
Fig. 2 is a flowchart showing a flow of processes related to functions of an estimated vehicle speed calculating unit and a wheelie end determining unit according to the first embodiment;
Fig. 3 is a time chart showing a change in an estimated vehicle speed from a time of the start of wheelie to a time right after the end of the wheelie;
Fig. 4 is a schematic diagram showing a configuration of an anti-lock brake apparatus for a motorcycle according to a second embodiment of the invention;
Fig. 5 is a flowchart showing a flow of processes related to an estimated vehicle speed calculating unit and a wheelie end determining unit according to the second embodiment;
Fig. 6 is a time chart showing a change in an estimated vehicle speed from a time of the start of wheelie to a time right after the end of the wheelie ;
Fig. 7 is a schematic diagram showing a configuration of the anti-lock brake apparatus for a motorcycle according to a third embodiment of the invention;
Fig. 8 is a flowchart showing a flow of processes related to an estimated vehicle speed calculating unit and a wheelie end determining unit according to the third embodiment;
Fig. 9 is a time chart showing a change in an estimated vehicle speed from a time of the start of wheelie -to a time right after the end of the wheelie;
Fig. 10 is a schematic diagram showing a configuration of the anti-lock brake apparatus for a motorcycle according to a fourth embodiment of the invention;
Fig. 11 is a flowchart showing a flow of processes related to an estimated vehicle speed calculating unit and a wheelie end determining unit according to the fourth embodiment;
Fig. 12 is a time chart showing a change in an estimated vehicle speed from a time of the start of wheelie to a time right after the end of the wheelie ; and
Fig. 13 is a time chart showing a change in an estimated vehicle speed in related arts from a time of the start of wheelie to a time when a predetermined time elapses after the end of the wheelie.

### DETAILED DESCRIPTION OF EXEMPLARY EMBODIMENTS OF THE INVENTION EMBODIMENTS

### (First Embodiment)

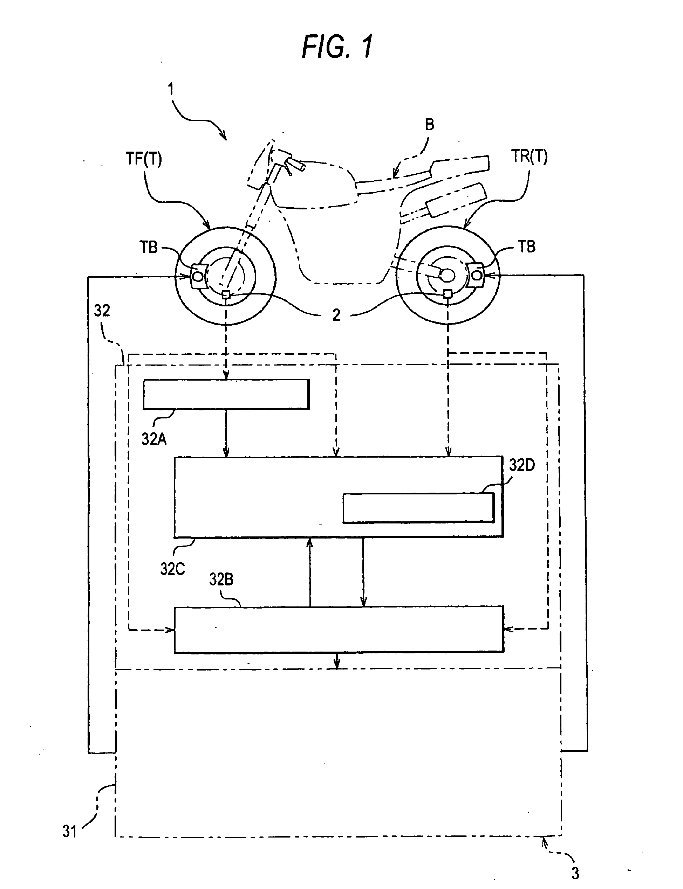

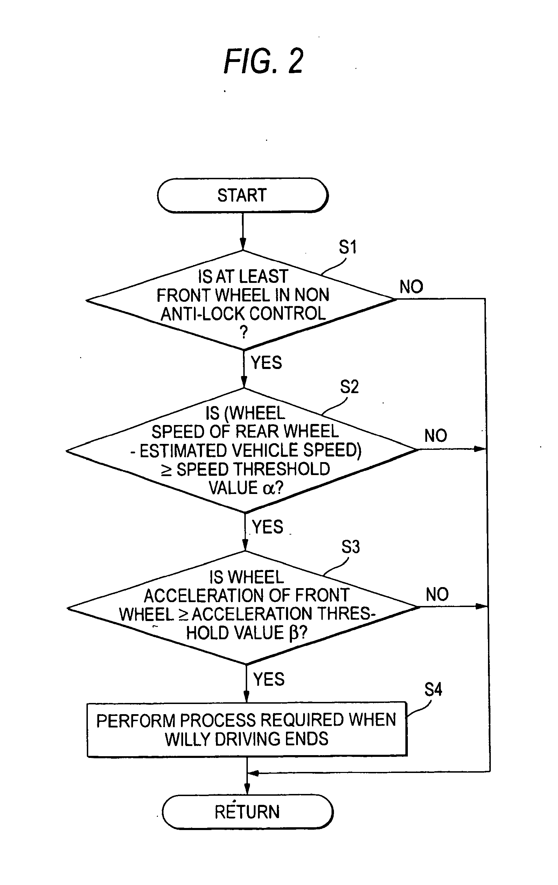

Hereinafter, an anti-lock brake apparatus for a motorcycle according to a first embodiment of the present invention will be described with reference to the attached drawings. Fig. 1 is a schematic diagram showing a configuration of the anti-lock brake apparatus for a motorcycle according to the first embodiment of the invention. Fig. 2 is a flowchart showing the functions of an estimated vehicle speed calculating unit and a wheelie end determining unit according to the first embodiment.

As shown in Fig. 1, the anti-lock brake apparatus 1 for a motorcycle includes a wheel speed sensor 2 (wheel speed obtaining unit) which obtains wheel speeds of a front wheel (non driven wheel) TF and a rear wheel (driven wheel) TR of a motorcycle B and brake fluid pressure controller 3 which appropriately controls brake fluid pressure generated by a brake operation of a driver to be applied to each wheel T (front wheel TF and rear wheel TR). Here, the brake fluid pressure controller 3 is small enough to be disposed in a proper position of a vehicle body of the motorcycle B, but for the convenience of description, the brake fluid pressure controller 3 is illustrated on an enlarged scale.

The brake fluid pressure controller 3 includes a hydraulic pressure unit 31 in which a flow path or any electronic component (an electronic valve, a pump, or the like) is disposed and a controller 32 which increases, decreases, or maintains brake fluid pressure applied to each wheel T through a corresponding wheel brake TB by suitably controlling various components disposed in the hydraulic pressure unit 31.

The controller 32 includes a front wheel acceleration calculating unit 32A, an anti-lock control unit 32B, an estimated vehicle speed calculating unit 32C, and a wheelie end determining unit 32D. Here, the controller 32, for example, includes a CPU, a RAM, a ROM, and an input/output circuit. The controller 32 is configured to perform anti-lock control by executing various arithmetic processes based on a signal from each of wheel speed sensors 2, and each wheel speed sensor 2 and 2, a program or data stored in the ROM.

The front wheel acceleration calculating unit 32A calculates a wheel acceleration of the front wheel based on a wheel speed of the front wheel obtained by the wheel speed sensor 2 of the front wheel TF and outputs the calculated wheel acceleration of the front wheel to the estimated vehicle speed calculating unit 32C.

The anti-lock control unit 32B calculates a slip ratio of the front wheel TF based on the wheel speed of the front wheel obtained by the wheel speed sensor 2 of the front wheel TF and the estimated vehicle speed output from the estimated vehicle speed calculating unit 32C. Then, the anti-lock control unit 32B performs known anti-lock control which prevents the front wheel from being locked by suitably controlling the various components of the hydraulic pressure unit 31 based on the slip ratio of the front wheel TF. Likewise, the anti-lock control unit 32B calculates a slip ratio of the rear wheel TF based on the wheel speed of the rear wheel obtained by the wheel speed sensor 2 of the rear wheel TR and the estimated vehicle speed output from the estimated vehicle speed calculating unit 32C. Then, the anti-lock control unit 32B performs the known anti-lock control on the rear wheel TR based on the slip ratio of the rear wheel TR. In addition, the anti-lock control unit 32B outputs a front-wheel-ON signal or a rear-wheel-ON signal which indicates that the front wheel TF or the rear wheel TR is in anti-lock control to the estimated vehicle speed calculating unit 32C when starting the anti-lock control of the front wheel TF or the rear wheel TR. In addition, the anti-lock control unit 32B outputs a front-wheel-OFF signal or a rear-wheel-OFF signal which indicates that the front wheel TF or the rear wheel TR is in non anti-lock control to the estimated vehicle speed calculating unit 32C when ending the anti-lock control of the front wheel TF or the rear wheel TR.

When the estimated vehicle speed calculating unit 32C receives both the front-wheel-OFF - signal and the rear-wheel-OFF signal from the anti-lock control unit 32B, that is, both wheels T and T are in non anti-lock control, the estimated vehicle speed calculating unit 32C calculates an estimated vehicle speed based on the wheel speed of the front wheel obtained by the wheel speed sensor 2 of the non-driven front wheel. When the estimated vehicle speed calculating unit 32C receives at least one of the front-wheel-ON signal and the rear-wheel-ON signal from the anti-lock control unit 32B, that is, in the anti-lock control, the estimated vehicle speed calculating unit 32C compares the wheel speeds of the front wheel and the rear wheel which are respectively obtained from the wheel speed sensors 2 and 2 and calculates an estimated vehicle speed based on a wheel speed which has a higher value than the other. During the motorcycle B is in the wheelie,
the anti-lock control is not started since the driver does not operate the brake, and the estimated vehicle speed calculating unit 32C is configured to calculate an estimated vehicle speed by using the above-described calculation method used in the non anti-lock control (calculation method based on the wheel speed of the front wheel).

The estimated vehicle speed calculating unit 32C includes the wheelie end determining unit 32D to be described later. When it is determined that the wheelie of the motorcycle B has ended by the wheelie end determining unit 32D, the estimated vehicle speed calculating unit 32C calculates an estimated vehicle speed based only on the wheel speed of the rear wheel at least for a predetermined time instead of calculating the estimated vehicle speed based on the wheel speed of the front wheel.

The wheelie end determining unit 32D determines that the wheelie has ended when the front wheel TF is the in non anti-lock control, the wheel speed of the rear wheel is higher than the estimated vehicle speed by a speed threshold value α (see Fig. 2) or more, and the wheel acceleration of the front wheel is equal to or greater than an acceleration threshold value β (see Fig. 2). To be more specifically, as shown in Fig. 2, the wheelie end determining unit 32D determines whether at least the front wheel TF is in non anti-lock control, to be even more specifically, whether at least a front-wheel-OFF signal is received from the anti-lock control unit 32B (step S1). In addition, when the wheelie end determining unit 32D determines that the front wheel TF is in non anti-lock control (step S1; Yes), the wheelie end determining unit 32D determines whether the wheel speed of the rear wheel is higher than the estimated vehicle speed by the speed threshold value α or more, to be more specifically, a difference between the wheel speed of the rear wheel and the estimated vehicle speed is equal to or greater than the threshold value α (step S2).

When the wheelie end determining unit 32D determines that the wheel speed of the rear wheel is higher than the estimated vehicle speed by the speed threshold value α or more (step S2; Yes), the wheelie end determining unit 32D determines whether the wheel acceleration of the front wheel is equal to or higher than the acceleration threshold value β (step S3). When the wheelie end determining unit 32D determines that the wheel acceleration of the front wheel is equal to or higher than the acceleration threshold value β (step S3; Yes), it is determined that the wheelie has ended. When the end of the wheelie is determined by the wheelie end determining unit 32D (step S3; Yes), the estimated vehicle speed calculating unit 32C performs a process required at a time when the wheelie
ends. In other words, the estimated vehicle speed calculating unit 32C calculates an estimated vehicle speed based on the wheel speed of the rear wheel for at least a predetermined time instead of calculating the estimated vehicle speed based on the wheel speed of the front wheel (step S4). The wheelie end determining unit 32D returns the process to the start START of the flow when the process of the step S4 is completed or it is determined to be "No" in each step S1, S2, or S3.

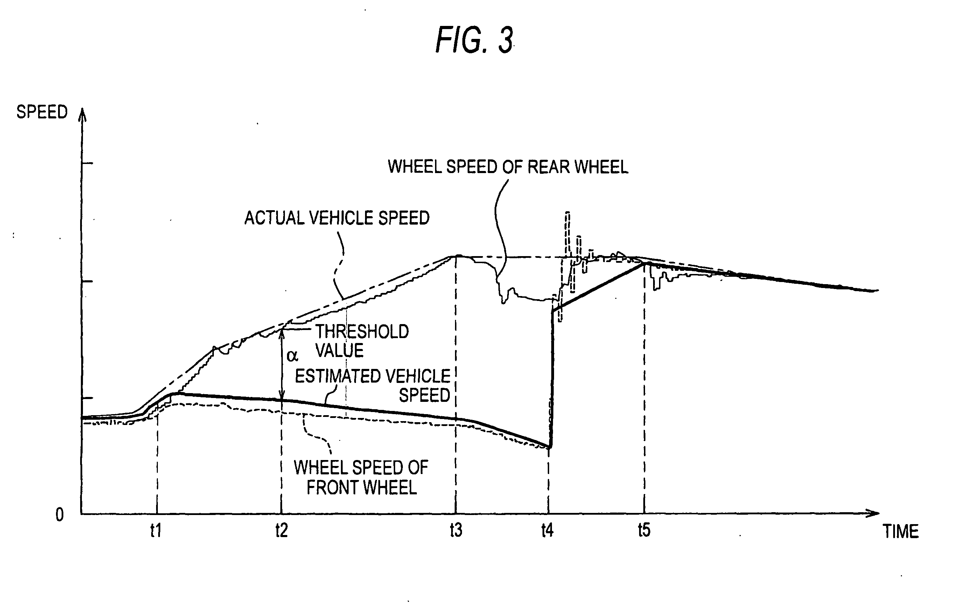

Hereinafter, an operation of the anti-lock brake apparatus 1 for a motorcycle according to the first embodiment of the invention will be described with reference to Figs. 2 and 3. In the figures to be referenced to, Fig. 3 is a time chart showing a change in an estimated vehicle speed from a time of the start of wheelie to a time right after the end of the wheelie.

As shown in Fig. 3, when the wheelie is started by a driver's sudden opening operation of a throttle (time t1) , the operation of a brake is not performed, and thus the status is in non anti-lock control, and accordingly, the estimated vehicle speed calculating unit 32C, at first, calculates an estimated vehicle speed based on the wheel speed of the front wheel like in a case before the wheelie is started. At this time, wheelie end determining unit 32D determines the condition to be "Yes" in a step S1 of Fig. 2, since the status is in non anti-lock control during the wheelie, as described above. However, right after the wheelie is started, a condition of a step S2 is not satisfied, and accordingly, the wheelie end determining unit 32D determines the condition to be "No" in the step S2 to repeat the process of the step S1.

Thereafter, when the difference between the wheel speed of the rear wheel and the estimated vehicle speed becomes equal to or greater than the speed threshold value α (time t2), the wheelie end determining unit 32D determines the condition to be "Yes" in the step S2 of Fig. 2. However, since the condition of a step S3 is not satisfied during the time from t2 to t4, the wheelie end determining unit 32D determines the condition to be "No" in the step S3 to repeat the process of the steps S1 and S2.

When the rear wheel TR decreases in speed (time t3) by the driver's returning the throttle after a predetermined time elapses from the time t2, thereafter the front wheel TF lands on the ground, the front wheel TF which has been inertia spinning in the air is driven by the ground which moves relatively, and accordingly, the wheel acceleration of the front wheel increases rapidly (time t4). When the wheel acceleration of the front wheel rapidly increases to be equal to or greater than the acceleration threshold value β, the wheelie end determining unit 32D determines the condition to be "Yes" in the step S3 of Fig. 2 and determines that the wheelie has ended.

As described above, when the end of the wheelie is determined by the wheelie end determining unit 32D, the estimated vehicle speed calculating unit 32C calculates an estimated vehicle speed based on the wheel speed of the rear wheel for at least a predetermined time (time from t4 to t5) instead of calculating the estimated vehicle speed based on the wheel speed of the front wheel (step S4). Accordingly, although the anti-lock control is started by the driver' s brake operation right after the end of the wheelie, a suitable anti-lock control is performed according to the estimated vehicle speed calculated based on the wheel speed of the rear wheel which is close to the actual vehicle speed. After a time t5, the estimated vehicle speed calculating unit 32C calculates an estimated vehicle speed by using a general method in which an estimated vehicle speed is calculated based on the wheel speed having a higher value between the front vehicle speed and the rear vehicle speed in the anti-lock control and the estimated vehicle speed is calculated based on the wheel speed of the front wheel in the non anti-lock control. Here, the predetermined time (that is, a time from t4 to t5) is a time from a time t4 when the front wheel TF lands on the ground due to the end of the wheelie and the wheel acceleration of the front wheel becomes equal to or greater than the acceleration threshold value β (that is, a time when the wheel speed of the front wheel rapidly increases) to a time required for the variation of the wheel speed of the front wheel to be settled and stabilized through an overshoot period or the like or a time which is slightly longer than the above-described time. The setting of the time can be properly determined by an experiment, a simulation, or the like with the specification of the vehicle or an assumed usage condition considered.

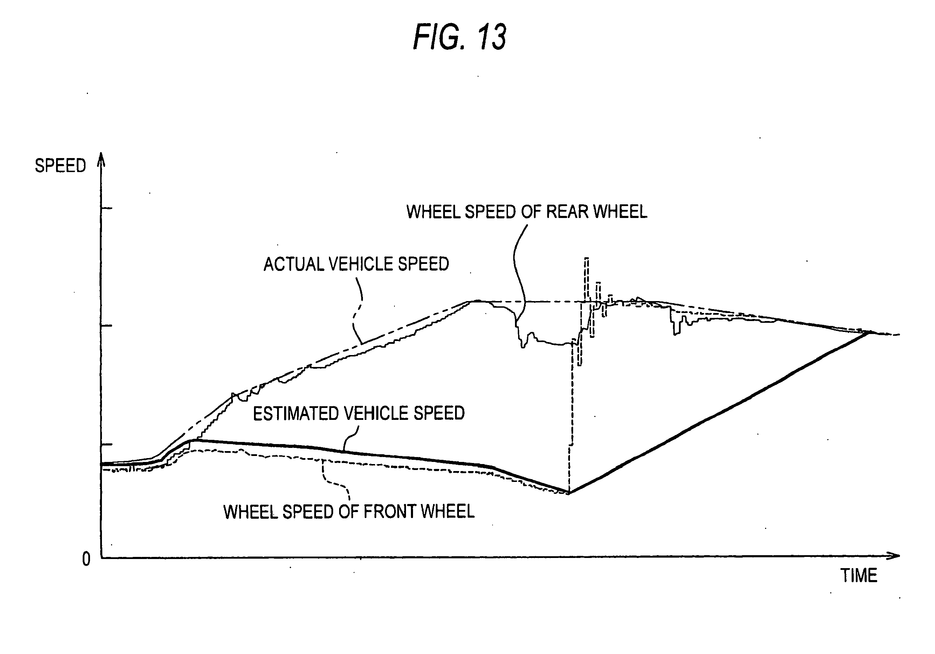

Accordingly, the following advantage can be acquired according to the first embodiment of the invention.
Since, right after the end of the wheelie, an estimated vehicle speed is calculated based on the wheel speed of the rear wheel TR which has been continuously contacted the ground for a time from the start of the wheelie to the end of the wheelie, that is a wheel speed close to the actual vehicle speed, a suitable anti-lock control can be started quickly right after the wheelie.
Since, after the landing of the front wheel TF, a general calculation method is used after the variation (noise moving upward/downward) of the wheel speed of the front wheel is stabilized, an estimated vehicle speed can be precisely calculated by using the general calculation method after noise disappears. The above described predetermined time (a time interval from t4 to t5 for which the estimated vehicle speed is calculated based on the wheel speed of the rear wheel) is shorter than a time interval in which the estimated vehicle speed is increased according to a slope which is acquired considering an acceleration limit of the vehicle body is considered in a time chart related to a general technology shown in Fig. 13. In other words, according to the anti-lock brake apparatus for a motorcycle, it becomes possible to return to the general method of calculating the estimated vehicle speed in a time shorter than a case where the general technology is used.

### (Second Embodiment)

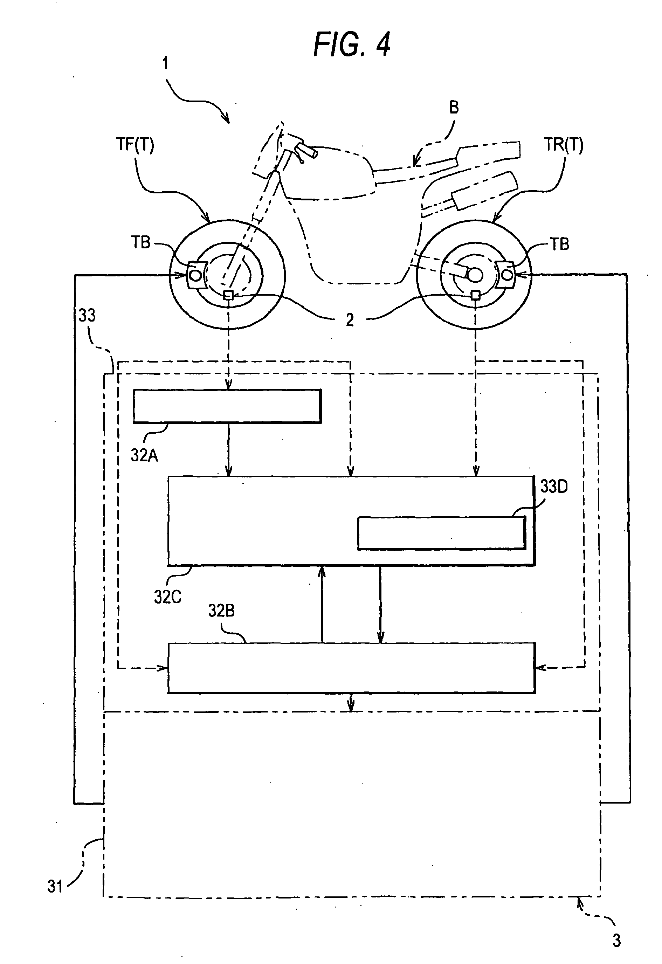

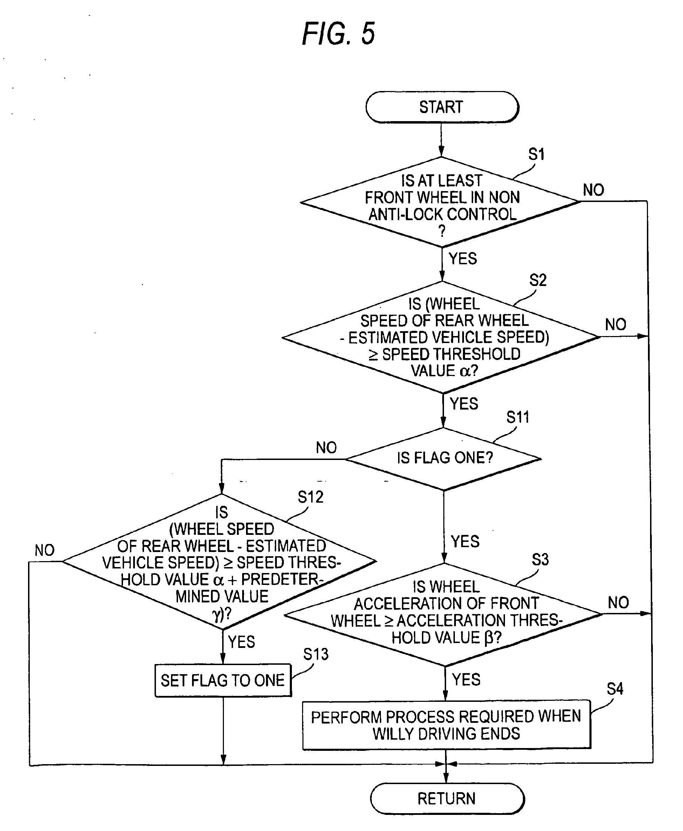

Hereinafter, an anti-lock brake apparatus for a motorcycle according to a second embodiment of the invention will be described. In the second embodiment, only a part of the controller 32 of the brake fluid pressure controller 3 according to the first embodiment is modified, and to a configuration element which is the same as a configuration element according to the first embodiment, the same numeral is assigned, and the description thereof is omitted. In the referred figures, Fig. 4 is a schematic diagram showing a configuration of the anti-lock brake apparatus for a motorcycle according to the second embodiment of the invention. Fig. 5 is a flowchart showing the flow of processes related to an estimated vehicle speed calculating unit and a wheelie end determining unit according to the second embodiment.

As shown in Fig. 4, a controller 33 includes a front wheel acceleration calculating unit 32A, an anti-lock control unit 32B, and an estimated vehicle speed calculating unit 32C which are the same as those of the first embodiment. In addition, the controller 33 includes a wheelie end determining unit 33D which has a function somewhat different from that of the first embodiment.

In the wheelie end determining unit 33D, as shown in Fig. 5, a condition that the wheel speed of the rear wheel increases additionally after the wheel speed of the rear wheel reaches a status that the wheel speed of the rear wheel becomes higher than the estimated vehicle speed by the speed threshold value α or more (step S2; Yes) is added to the determination conditions (steps S1 to S3). In other words, the wheelie end determining unit 33D determines whether the wheel speed of the rear wheel increased additionally after the wheel speed of the rear wheel reached a status that the wheel speed of the rear wheel becomes higher than the estimated vehicle speed by the speed threshold value α or more in the past (step S11) by checking whether a flag is set (equal to one). When the condition is determined to be "Yes" in the step S11, the process is moved to the step S3. On the other hand, when the condition is determined to be "No" in the step S11, the process is moved to the step S12.

In addition, the wheelie end determining unit 33D determines whether the wheel speed of the rear wheel increased additionally by a predetermined value γ after a status that the wheel speed of the rear wheel is higher than the estimated vehicle speed by the speed threshold value α or more was reached by determining whether the difference between the wheel speed of the rear wheel and the estimated vehicle speed is equal to or greater than a sum of the speed threshold value α and the predetermined value γ in the step S12. When the condition is determined to be "Yes" in the step S12, the wheelie end determining unit 33D stores a record that the wheel speed of the rear wheel increased additionally by the predetermined value γ after a status that the wheel speed of the rear wheel is higher than the estimated vehicle speed by the speed threshold value α or more was reached (step S13) in the past. When the condition is determined to be "No" in the step S12, the wheelie end determining unit 33D doest not set the flag and repeats the operations of steps S1 -> S2 -> S11 → S12. The flag set in the step S13 is reset, for example, in the process of the step 4.

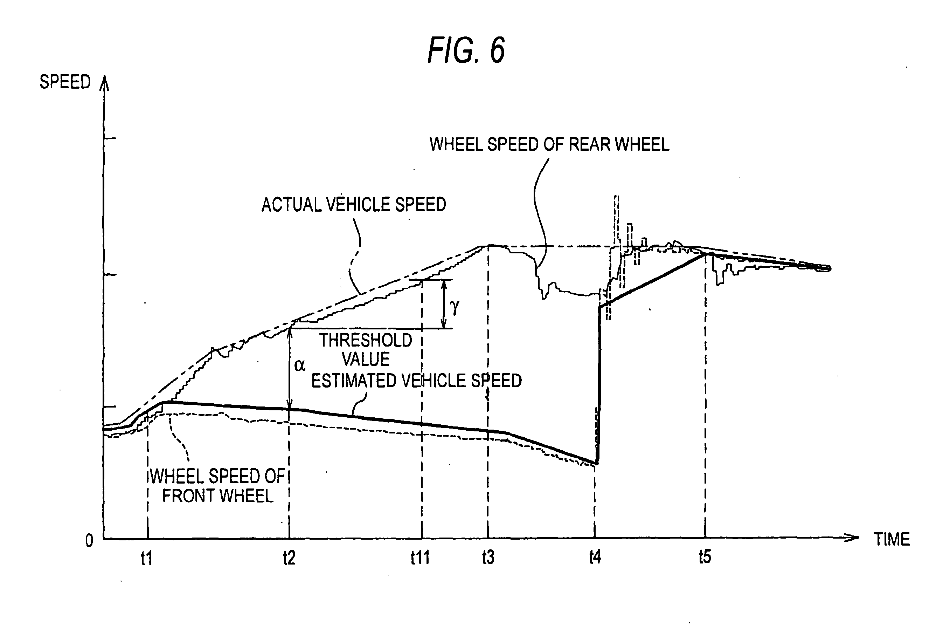

Hereinafter, the operation of the anti-lock brake apparatus 1 according to the second embodiment of the invention will be described with reference to Figs. 5 and 6. In the figures to be referred to, Fig. 6 is a time chart showing a change in an estimated vehicle speed from a time of the start of wheelie to a time right after the end of the wheelie.
An operation which is the same as that of the first embodiment is omitted appropriately.

As shown in Fig. 6, for a time interval from a time t1 to a time t2, the wheelie end determining unit 33D determines the condition to be "Yes" in the step S2 when the difference between the wheel speed of the rear wheel and the estimated vehicle speed is equal to or greater than the speed threshold value α at the time t2 and determines whether the flag is set in the step S11 by appropriately performing the processes of the steps S1 and S2 like in the first embodiment. Since the flag has not been set at this time, the wheelie end determining unit 33D determines the condition to be "No" in the step S11 and determines whether the difference between the wheel speed of the rear wheel and the estimated vehicle speed is equal to or greater than the sum of the speed threshold value α and the predetermined value γ in the step S12. Since the condition of the step S12 is not satisfied for the time from t2 to t11, the wheelie end determining unit 33D doest not set the flag (step S12; No) and repeats the process of the steps S1 -> S2 -> S11 -> S12.

when the difference between the wheel speed of the rear wheel and the estimated vehicle speed becomes equal to or greater than the sum of the speed threshold value α and the predetermined value γ at time t11, the wheelie end determining unit 33D determines the condition to be "Yes" in the step S12 and sets the flag (step S13). Thereafter, the wheelie end determining unit 33D performs the processes of the steps S1 and S2 again, and then determines the condition to be "Yes" in the step S11 to perform the process of the step S3. The operations thereafter are the same as in the first embodiment, and thus the description thereof is omitted.

Accordingly, the following advantage can be acquired in the second embodiment.
Since the increase of the wheel speed of the rear wheel by the predetermined value γ after a condition that the wheel speed of the rear wheel is higher than the estimated vehicle speed by the speed threshold value α or more (after time t2) has reached is added as an additional condition, the wheelie
which is mainly performed while accelerating a vehicle can be determined more correctly to be able to identify any other similar situation (for example, a status of abrupt lifting of the front wheel TF caused by passing over a height difference or passing down a height difference, wheel spin, or the like).

### (Third Embodiment)

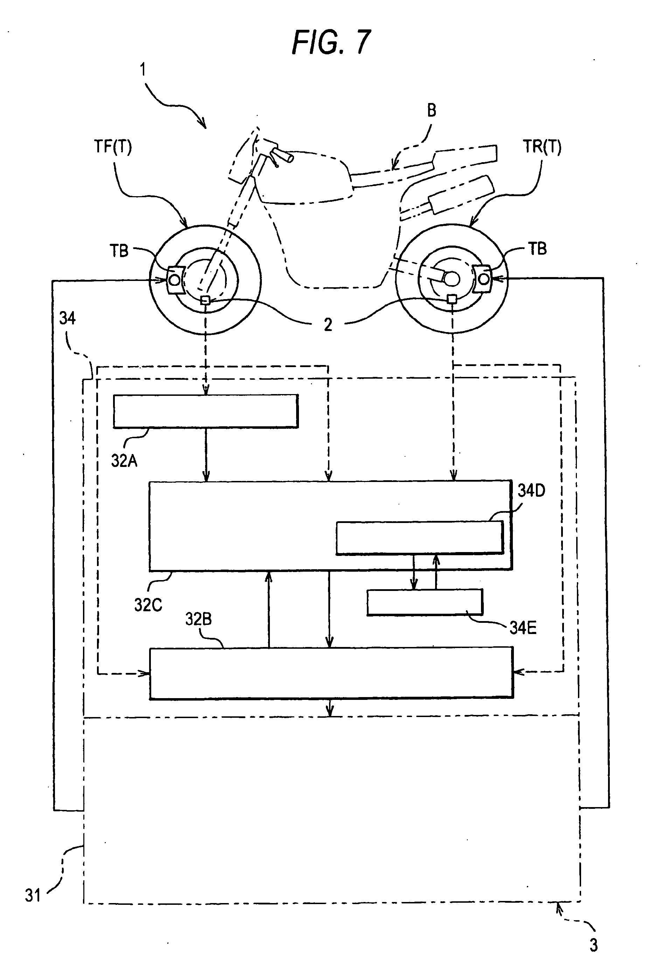

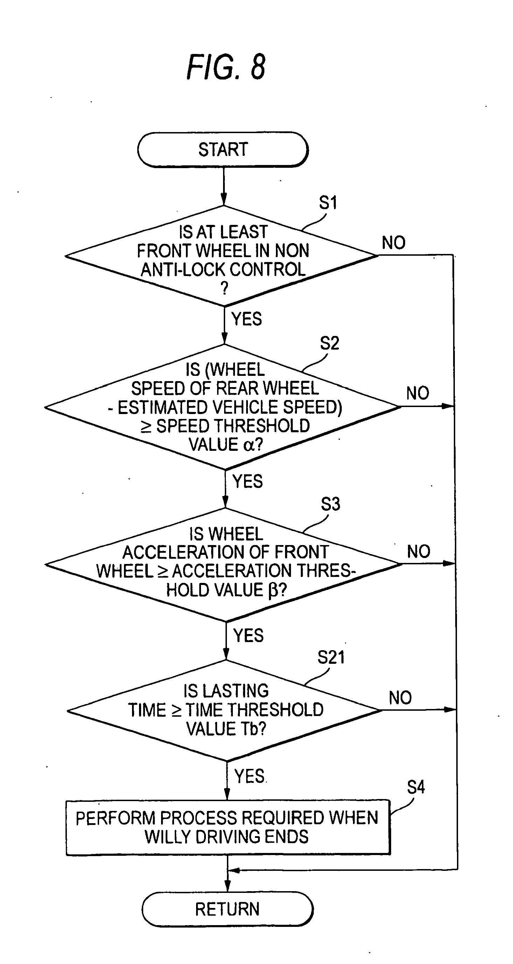

Hereinafter, an anti-lock brake apparatus for a motorcycle according to a third embodiment of the invention will be described. In the third embodiment, only a part of the controller 32 of the brake fluid pressure controller 3 according to the first embodiment is modified, and to a configuration element which is the same as a configuration element according to the first embodiment, the same numeral is assigned, and the description thereof is omitted. In the referred figures, Fig. 7 is a schematic diagram showing a configuration of the anti-lock brake apparatus for a motorcycle according to the third embodiment of the invention. Fig. 8 is a flowchart showing the flow of processes related to an estimated vehicle speed calculating unit and a wheelie end determining unit according to the third embodiment.

As shown in Fig. 7, a controller 34 includes a front wheel acceleration calculating unit 32A, an anti-lock control unit 32B, and an estimated vehicle speed calculating unit 32C which are the same as those of the first embodiment. In addition, the controller 34 includes a wheelie end determining unit 34D which has a function somewhat different from that of the first embodiment and a time measuring unit 34E which is not provided in the first embodiment.

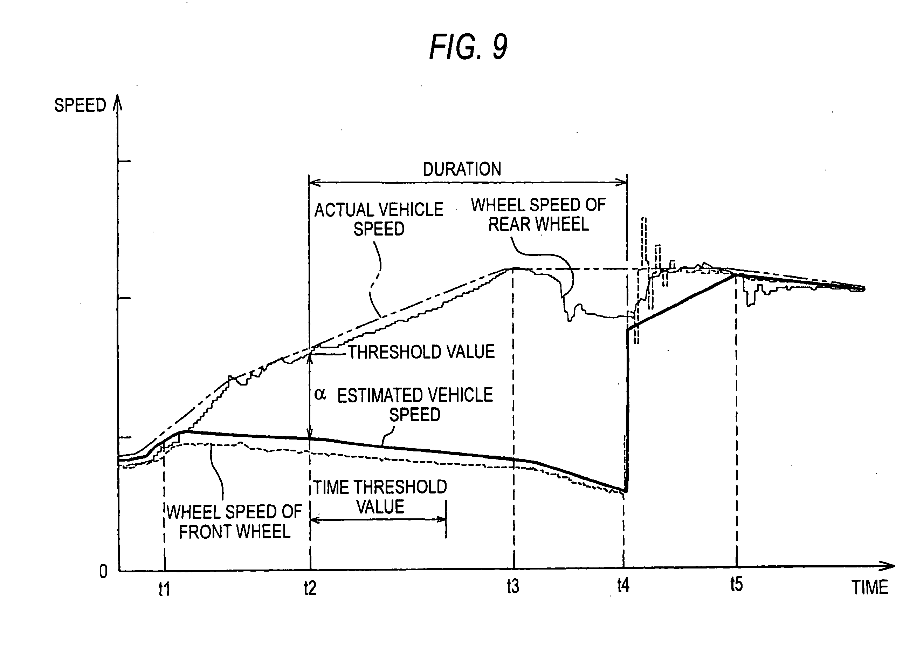

The time measuring unit 34E measures a duration of a status that the wheel speed of the rear wheel is higher than the estimated vehicle speed by the speed threshold value α (see Fig. 8) or more. More specifically, as shown in Fig. 9, the time measuring unit 34E starts measuring at a time when the wheel speed of the rear wheel is higher than the estimated vehicle speed by the speed threshold value α or more (time t2) and ends measuring at a time when the wheel acceleration of the front wheel becomes equal to or greater than the acceleration threshold value β (t4). In other words, the time measuring unit 34E starts measuring when receiving a signal indicating that the wheel speed of the rear wheel becomes higher than the estimated vehicle speed by the speed threshold value α or more from the wheelie end determining unit 34D shown in Fig. 7 and ends the measuring when a signal indicating that the wheel acceleration of the front wheel becomes equal to or greater than the acceleration threshold value β. Then, the time measuring unit 34E outputs the duration acquired by the time measuring to the wheelie end determining unit 34D.

The wheelie end determining unit 34D, as shown in Fig. 8, adds a condition that the duration measured by the time measuring unit 34E is greater than a time threshold value Tb to the determination conditions (steps S1 to S3) of the first embodiment. In other words, the wheelie end determining unit 34D determines whether the duration is greater than the time threshold value Tb after the condition of the step S3 is determined to be "Yes" (step S21). When the wheelie end determining unit 34D determines that the duration is equal to or smaller than the time threshold value Tb ("No"), it is determined that the wheelie is not performed, so that the process required at the end of the wheelie of the step S4 is not performed. On the other hand, the When the wheelie end determining unit 34D determines that the duration is greater than the time threshold value Tb ("Yes"), it is determined that the wheelie is performed, and the process is moved to the step S4. In addition, when the condition is determined to be "Yes" in the steps S2 and S3, the wheelie end determining unit 34D outputs a signal indicating the determined condition to the time measuring unit 34E and refers to the duration output from the time measuring unit 34E in the step S21.

Hereinafter, the operation of the anti-lock brake apparatus 1 according to the third embodiment of the invention will be described with reference to Figs. 8 and 9. In the figures to be referred to, Fig. 9 is a time chart showing a change in an estimated vehicle speed from a time of the start of wheelie to a time right after the end of the wheelie.
An operation which is the same as that of the first embodiment is omitted appropriately.

As shown in Fig. 9, for a time interval from time t1 to time t2, the wheelie end determining unit 34D repeats the process of the step S1; Yes -> the step S2; No like in the first embodiment. When the wheel speed of the rear wheel becomes higher than the estimated vehicle speed by the speed threshold value α or more at a time t2, the wheelie end determining unit 34D determines the condition to be "Yes" in the step S2. At this time, the time measuring unit 34E starts measuring the duration. The wheelie end determining unit 34D repeats the process of the step S1; Yes -> the step S2; No for the time interval from time t2 to time t4. Thereafter, when the wheel acceleration of the front wheel becomes greater than the acceleration threshold value β at time t4, the wheelie end determining unit 34D determines the condition of the step S3 to be "Yes". At this time, the time measuring unit 34E ends measuring the duration.

As described above, after the wheelie end determining unit 34D determines the condition to be "Yes" in the step S3, the wheelie end determining unit 34D determines whether the measured duration is greater than the time threshold value Tb in the step S21. Here, since the duration is greater than the time threshold value Tb in the embodiment, the wheelie end determining unit 34D determine the condition to be "Yes" in the step S21, and the process is moved to the step S4 like in the first embodiment.

Accordingly, the following advantage can be acquired in the third embodiment.
Since a condition whether the duration measured by the time measuring unit 34E becomes greater than the time threshold value Tb is added as an additional condition, the wheelie in which a status that the wheel speed of the rear wheel is higher than the estimated vehicle speed by the speed threshold value α or more is maintained for a predetermined time can be determined more correctly to be able to identify any other similar situation (for example, a status of abrupt lifting of the front wheel TF caused by passing over a height difference or passing down a height difference, wheel spin, or the like).

### (Fourth Embodiment)

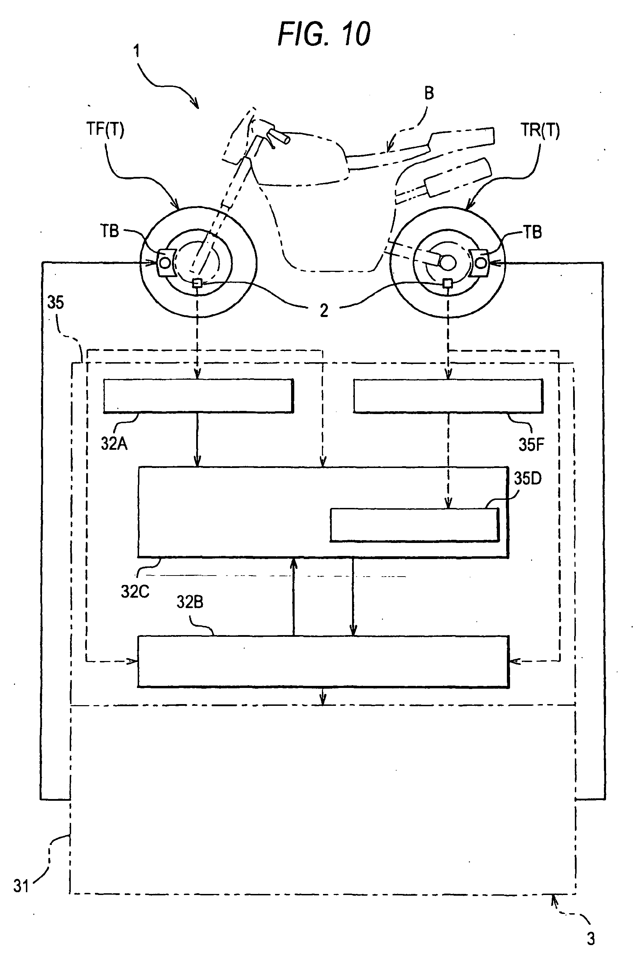

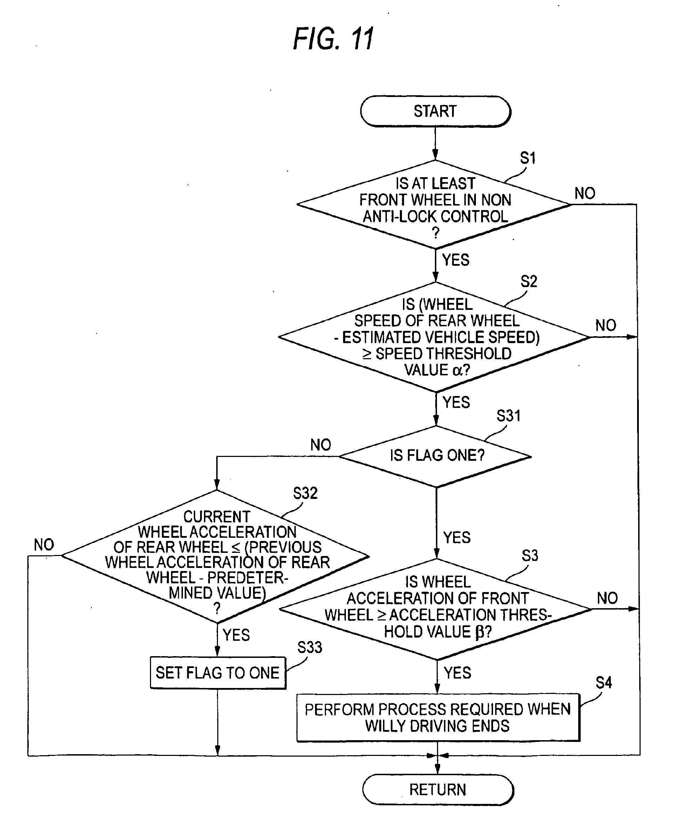

Hereinafter, an anti-lock brake apparatus for a motorcycle according to a fourth embodiment of the invention will be described. In the fourth embodiment, only a part of the controller 32 of the brake fluid pressure controller 3 according to the first embodiment is modified, and to a configuration element which is the same as a configuration element according to the first embodiment, the same numeral is assigned, and the description thereof is omitted. In the referred figures, Fig. 10 is a schematic diagram showing a configuration of the anti-lock brake apparatus for a motorcycle according to the fourth embodiment of the invention. Fig. 11 is a flowchart showing the flow of processes related to an estimated vehicle speed calculating unit and a wheelie end determining unit according to the fourth embodiment.

As shown in Fig. 10, a controller 35 includes a front wheel acceleration calculating unit 32A, an anti-lock control unit 32B, and an estimated vehicle speed calculating unit 32C which are the same as those of the first embodiment. In addition, the controller 35 includes a wheelie end determining unit 35b which has a function somewhat different from that of the first embodiment and a rear wheel acceleration calculating unit 35F which is not provided in the first embodiment.

The rear wheel acceleration calculating unit 35F calculates a wheel acceleration of the rear wheel based on a wheel speed of the rear wheel which is acquired by the wheel speed sensor 2 of the rear wheel TR and outputs the calculated wheel acceleration of the rear wheel to the wheelie end determining unit 35D.

In the wheelie end determining unit 35D, as shown in Fig. 11, a condition that the wheel acceleration of the rear wheel decreases from a previous value by a predetermined value or more after a status that the wheel speed of the rear wheel is higher than the estimated vehicle speed by the speed threshold value α or more is reached is added to the determination conditions (steps S1 to S3) of the first embodiment. In other words, the wheelie end determining unit 35D determines whether the wheel acceleration of the rear wheel has decreased from a previous value by a predetermined value or more after a status that the wheel speed of the rear wheel is higher than the estimated vehicle speed by the speed threshold value α or more is reached by checking whether the flag is set (equal to one) after the step S2 (step S31). When the condition is determined to be "Yes" in the step S31, the wheelie end determining unit 35D moves the process to the step S3. On the other hand, when the condition is determined to be "No" in the step S31, the wheelie end determining unit 35D moves the process to the step S32.

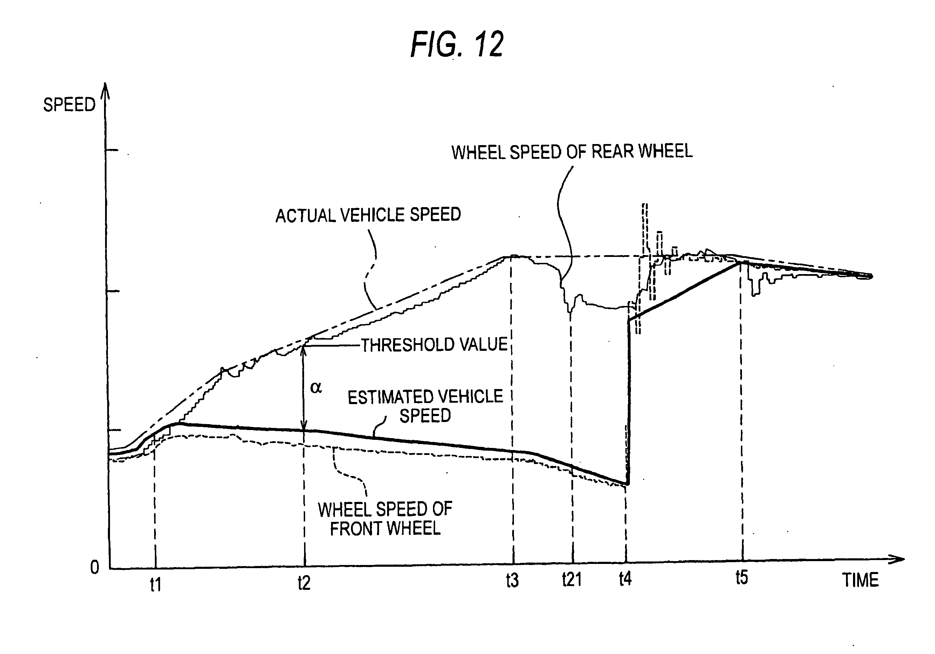

In addition, the wheelie end determining unit 35D determines whether the wheel acceleration of the rear wheel decreases from the previous value by a predetermined value or more by determining whether the wheel acceleration of the rear wheel is equal to or smaller than a value resulting from subtracting the predetermined value from the previous wheel acceleration of the rear wheel in the step S32. Here, "the wheel acceleration of the rear wheel decreases from the previous value by a predetermined value or more" means a time when the slope of the wheel speed of the rear wheel rapidly decreases around time t21, described with reference to Fig. 12 (a graph showing a relationship between speed and time). Here, a case where the wheel acceleration of the rear wheel decreases from the previous value also happens when a transition from a speed increasing status (equal acceleration status) to an equal speed status (a status in which the acceleration is zero) occurs around time t2, but it can be configured that the above-described condition is satisfied at around the time t21 by setting the amount of change in the slope of speed (the predetermined value) to a value (an estimated value for landing of the front wheel by returning the throttle) corresponding to the rapid change at around the time t21. The predetermined value may be appropriately determined by an experiment, a simulation or the like.

When the condition is determined to be "Yes" in the step S32, the wheelie end determining unit 35D stores the record that the wheel acceleration of the rear wheel decreased from the previous value by a predetermined value or more in the past by setting the flag (change the flag from zero to one) (step S33). On the other hand, when the condition is determined to be "No" in the step S32, the wheel ie end determining unit 35D is configured to repeat the operations of the steps S1 -> S2 -> S31 -> S32 instead of setting the flag. The flag set in the step S33, for example, is reset in the process of the step 4.

Hereinafter, the operation of the anti-lock brake apparatus 1 according to the fourth embodiment of the invention will be described with reference to Figs. 11 and 12. In the figures to be referred to, Fig. 12 is a time chart showing a change in an estimated vehicle speed from a time of the start of wheelie to a time right after the end of the wheelie.
An operation which is the same as that of the first embodiment is omitted appropriately.

As shown in Fig. 12, for a time interval from time t1 to time t2, the wheelie end determining unit 35D performs the processes of the steps S1 and S2 appropriately like in the first embodiment, and, when the difference between the wheel speed of the rear wheel and the estimated vehicle speed becomes equal to or greater than the speed threshold value α at time t2, the condition is determined to be "Yes" in the step S2. Then, the wheelie end determining unit 35D checks whether the flag is set in the step S31. At this time, since the flag has not been set, the wheelie end determining unit 35D determines the condition to be "no" in the step S31 and determines whether the wheel acceleration of the rear wheel has decreased by a predetermined value or more from a previous value in the step S32. Since the condition of the step S32 is not satisfied for the time interval from time t2 to time t21, the wheelie end determining unit 35D doest not set the flag (step S32; No) and repeats the processes of the steps S1 -> S2 -> S31 -> S32.

When the wheel acceleration of the rear wheel decreases by a predetermined value or more from the previous value at time t21, the wheelie end determining unit 35D determines the condition to be "Yes" in the step S32 and sets the flag (step S33). Thereafter, the wheelie end determining unit 35D performs the process of the steps S1 and S2 again, determines the condition to be "Yes" in the step S31, and moves the process to the step S33 like in the first embodiment. The operations thereafter are the same as in the first embodiment, and thus the description thereof is omitted.

Accordingly, the following advantage can be acquired in the fourth embodiment.
Since the condition that the decrease of the wheel acceleration of the rear wheel by a predetermined value after a condition that the wheel speed of the rear wheel is higher than the estimated vehicle speed by the speed threshold value α or more has reached is added as an additional condition, the return of the throttle can be determined by the decrease of the wheel acceleration of the rear wheel, and the end of the wheelie is determined more correctly to be able to identify any other similar situation (for example, a status of abrupt lifting of the front wheel TF caused by passing over a height difference or passing down a height difference, wheel spin, or the like).

The present invention is not limited to the above-described embodiments and may be performed in various forms.
In each of the above-described embodiments, the estimated vehicle speed is calculated based on the wheel speed of the front wheel in the non anti-lock control, but the present invention is not limited thereto, and, for example, the estimated vehicle speed may be calculated based on the wheel speeds of the front wheel and the rear wheel in the non anti-lock control. However, in the case where the wheel speeds of the front and rear wheels are referred in the non anti-lock control, it is preferable that the start of wheelie is determined by a known wheelie start determining unit (a determination unit of which a distortion gauge is attached to a frame supporting the front wheel and which determines the start of the wheelie by detecting the lift of the front wheel using a signal from the distortion gauge or a determination unit which determines the start of wheelie when the wheel acceleration of the front wheel is about zero for over a predetermined time) and that the estimated vehicle speed is calculated based on the wheel speed of the front wheel after the start of the wheelie.

In one of the second to fourth embodiments, one new condition is added to the determination conditions of the first embodiment, but the present invention is not limited thereto, and two or more of the conditions added to the second to fourth embodiments may be combined to be added to the determination conditions of the first embodiment.

In the fourth embodiment, the return of the throttle is determined by determining whether the wheel acceleration of the rear wheel decreases by a predetermined value or more after a condition that the wheel speed of the rear wheel is higher than the estimated vehicle speed by the speed threshold value α or more is reached, but the present invention is not limited thereto. For example, when a throttle open sensor which detects its opening degree is prepared in the throttle, the condition that the wheel acceleration of the rear wheel decreases by a predetermined value or more may be replaced with a condition that the opening degree of the throttle is equal to or smaller than a predetermined value.

In one of the above-described embodiments, the braking power is acquired by the brake fluid pressure, but the present invention is not limited thereto, and, for example, the braking power may be acquired by a mechanical brake (including a regenerative brake) or the like.
In each embodiment, one brake fluid pressure controller 3 is used to supply proper brake fluid pressure to the wheels T, but the present invention is not limited thereto, and one brake fluid pressure controller 3 may be used to supply proper brake fluid pressure to each wheel T. In this case, for example, a control unit of one brake fluid pressure controller may have the function according to an embodiment of the invention, and the brake fluid pressure controller may control a hydraulic pressure unit of the other brake fluid pressure controller.

## Claims

1. An anti-block brake apparatus (1) for a motorcycle, comprising:
a wheel speed obtaining unit (2) which obtains wheel speed of front and rear wheels (TF, TR), respectively;
an estimated vehicle speed calculation unit (32C) which calculates an estimated vehicle speed based on the obtained wheel speeds; and
a front wheel acceleration calculating unit (32A) which calculates a wheel acceleration of the front wheel based on the wheel speed of the front wheel,
wherein anti-lock control is performed based on the wheel speeds and the estimated vehicle speed on the front and rear wheels, respectively,
the anti-lock brake apparatus being **characterized in that:**
the estimated vehicle speed calculating unit (32C) further includes a wheelie end determining unit (32D) which determines that wheelie has ended when following determination conditions (1) through (3) are satisfied:
(1) the front wheel (TF) is under non-anti lock control;
(2) the wheel speed of the rear wheel (TR) is higher than the estimated vehicle speed by a speed threshold value (α) or more; and
(3) the wheel acceleration of the front wheel (TF) is equal to or higher than an acceleration threshold value (β) and
when it is determined that the wheelie has ended by the wheelie end determining unit (32D), the estimated vehicle speed is calculated based on only the wheel speed of the rear wheel (TR) at least for a predetermined time.

2. The anti-lock brake apparatus for motorcycle according to claim 1, wherein a condition that the wheel speed of the rear wheel (TR) increases further after a status that the wheel speed of the rear wheel (TR) is higher than the estimated vehicle speed by the speed threshold value (α) or more is reached is added to the determination condition of the wheelie end determining unit (32D) as an additional condition.

3. The anti-lock brake apparatus according to claim 1 or 2, further comprising a time measuring unit (34E) which measures a duration in a status that the wheel speed of the rear wheel (TR) is higher than the estimated vehicle speed by the speed threshold value (α) or more,
wherein a condition that the duration measured by the time measuring unit (34E) is greater than a time threshold value (Tb) is added to the determination condition of the wheelie end determining unit (34D) as an additional condition.

4. The anti-lock brake apparatus according to any one of claims 1 to 3, further comprising a rear wheel acceleration calculating unit (35F) which calculates a wheel acceleration of the rear wheel (TF) based on the wheel speed of the rear wheel,
wherein a condition that the wheel acceleration of the rear wheel (TF) decreases by a predetermined value or more after a status that the wheel speed of the rear wheel is higher than the estimated vehicle speed by the speed threshold value (α) or more is reached is added to the determination condition of the wheelie end determining unit (32D) as an additional condition.

## Patentansprüche

1. Antiblockiervorrichtung (1) für ein Motorrad, umfassend:
eine Radgeschwindigkeitserfassungseinheit (2), die Radgeschwindigkeiten von jeweils Vorder- und Hinterrädern (TF, TR) erfasst,
eine abgeschätzte Fahrzeuggeschwindigkeitsberechnungseinheit (32C), die eine abgeschätzte Fahrzeuggeschwindigkeit basierend auf den erfassten Radgeschwindigkeit berechnet, und
eine Vorderradbeschleunigungsberechnungseinheit (32A), die eine Radbeschleunigung des Vorderrads basierend auf der Radgeschwindigkeit des Vorderrades berechnet,
wobei die Antiblockiersteuerung basierend auf den Radgeschwindigkeiten und der abgeschätzten Fahrzeuggeschwindigkeit jeweils der Vorder- und Hinterräder durchgeführt wird,
die Antiblockiervorrichtung **dadurch gekennzeichnet ist, dass**
die abgeschätzte Fahrzeuggeschwindigkeitsberechnungseinheit (32C) ferner eine Hochstartabschlusserfassungseinheit (32D) umfasst, die erfasst, das der Hochstart beendet wurde, wenn folgende Erfassungszustände (1) bis (3) erfüllt sind:
(1) das Vorderrad (TF) ist in einer Nicht-Antiblockiersteuerung,
(2) die Radgeschwindigkeit des Hinterrades (TR) ist, um einen Geschwindigkeitsgrenzwert (α) oder mehr, größer als die abgeschätzte Fahrzeuggeschwindigkeit, und
(3) die Radbeschleunigung des Vorderrades (TF) ist gleich oder größer als ein Beschleunigungsgrenzwert (β) ist und
wenn durch die Hochstartabschlusserfassungseinheit (32D) ermittelt wurde, dass der Hochstart beendet wurde, wobei die abgeschätzte Fahrzeuggeschwindigkeit basierend auf nur der Radgeschwindigkeit des Hinterrades (TR) für zumindest eine vorgegebene Zeit berechnet wird.

2. Antiblockiervorrichtung für ein Motorrad nach Anspruch 1, bei der ein Zustand, dass die Radgeschwindigkeit des Hinterrades (TR) weiter ansteigt nachdem ein Zustand, dass die Radgeschwindigkeit des Hinterrades (TR), um den Geschwindigkeitsgrenzwert (α) oder mehr, größer ist als die abgeschätzte Fahrzeuggeschwindigkeit, erreicht ist, zu dem Erfassungszustand der Hochstarterfassungseinheit (32D) als einem zusätzlichen Zustand addiert wird.

3. Antiblockiervorrichtung gemäß Anspruch 1 oder 2, ferner aufweisend eine Zeitmesseinheit (34E), die eine Dauer in einem Zustand misst, in dem die Radgeschwindigkeit des Hinterrades (TR), um einen Geschwindigkeitsgrenzwert (α) oder mehr, größer ist als die abgeschätzte Fahrzeuggeschwindigkeit,
wobei ein Zustand, dass die Dauer, die von der Zeitmesseinheit (34E) gemessen wurde, größer ist als ein Zeitgrenzwert (Tb) zu dem Erfassungszustand der Hochstartabschlusserfassungseinheit (34D) als einem zusätzlichen Zustand addiert wird.

4. Antiblockiervorrichtung nach einem der Ansprüche 1 bis 3, ferner umfassend eine Hinterradbeschleunigungsberechnungseinheit (35F), die eine Radbeschleunigung von dem Hinterrad (TF) basierend auf der Radgeschwindigkeit des Hinterrades berechnet,
wobei ein Zustand, dass die Radbeschleunigung des Hinterrades (TF) sich um einen vorgegebenen Wert oder mehr verringert, nach einem Zustand, dass die Radgeschwindigkeit des Hinterrades, um den Geschwindigkeitsgrenzwert (α) oder mehr, höher ist als die abgeschätzte Fahrzeuggeschwindigkeit, erreicht wird, zu dem Erfassungszustand der Hochstartabschlusserfassungseinheit (32D) als einem zusätzlichen Zustand addiert wird.

## Revendications

1. Dispositif de freinage antiblocage (1) pour une motocyclette, comprenant :
une unité d'obtention de vitesse de roue (2) qui obtient une vitesse de roue respectivement de roues avant et arrière (TF, TR) ;
une unité de calcul de vitesse de véhicule estimée (32C) qui calcule une vitesse de véhicule estimée sur base des vitesses de roue obtenues ; et
une unité de calcul d'accélération de roue avant (32A) qui calcule une accélération de roue de la roue avant en se basant sur la vitesse de roue de la roue avant,
dans lequel une commande d'antiblocage est effectuée en se basant sur les vitesses de roue et sur la vitesse de véhicule évaluée respectivement sur les roues avant et arrière,
le dispositif de freinage antiblocage étant **caractérisé en ce que :**
l'unité de calcul de vitesse de véhicule évaluée (32C) inclut en outre une unité de détermination de fin de cabré (32D) qui détermine qu'un cabré s'est terminé lorsque les conditions de détermination suivantes (1) à (3) sont satisfaites :
(1) la roue avant (TF) n'est dans sous une commande d'antiblocage ;
(2) la vitesse de roue de la roue arrière (TR) est plus élevée d'une valeur de seuil de vitesse (α) ou plus que la vitesse de véhicule évaluée ; et
(3) l'accélération de roue de la roue avant (TF) est supérieure ou égale à une valeur de seuil d'accélération (β), et
quand l'unité de détermination de fin de cabré (32D) a déterminé que le cabré s'est terminé, la vitesse de véhicule évaluée est calculée en se basant seulement sur la vitesse de roue de la roue arrière (TR) au moins pendant un temps prédéterminé.

2. Dispositif de freinage antiblocage pour motocyclette selon la revendication 1, dans lequel une condition en ce que la vitesse de roue de la roue arrière (TR) augmente davantage après qu'on a atteint un état dans lequel la vitesse de roue de la roue arrière (TR) est plus élevée de la valeur de seuil de vitesse (α) ou plus que la vitesse de véhicule évaluée est ajoutée à la condition de détermination de l'unité de détermination de fin de cabré (32D) en tant que condition supplémentaire.

3. Dispositif de freinage antiblocage selon la revendication 1 ou 2, comprenant en outre une unité de mesure de temps (34E) qui mesure une durée dans un état dans lequel la vitesse de roue de la roue arrière (TR) est plus élevée de la valeur de seuil de vitesse (α) ou plus que la vitesse de véhicule évaluée,
dans lequel une condition en ce que la durée mesurée par l'unité de mesure de temps (34E) est plus grande qu'une valeur de seuil de temps (Tb) est ajoutée à la condition de détermination de l'unité de détermination de fin de cabré (34D) en tant que condition supplémentaire.

4. Dispositif de freinage antiblocage selon l'une quelconque des revendications 1 à 3, comprenant en outre une unité de calcul d'accélération de roue arrière (35F) qui calcule une accélération de roue de la roue arrière (TF) en se basant sur la vitesse de roue de la roue arrière,
dans lequel une condition en ce que l'accélération de roue de la roue arrière (TF) diminue d'une valeur prédéterminée ou plus après qu'on a atteint un état dans lequel la vitesse de roue de la roue arrière est plus élevée de la valeur de seuil de vitesse (α) ou plus que la vitesse de véhicule évaluée est ajoutée à la condition de détermination de l'unité de détermination de fin de cabré (32D) en tant que condition supplémentaire.
